# EUROPEAN PATENT APPLICATION

(11) **EP 4 847 227 A1**
(43) Date of publication of application: **02.12.2026**
(21) Application number: 25178930.1
(22) Date of filing: 27.05.2025
(51) Int. Cl.: B29C 45/00, B29C 45/27, B65F 1/14, B65F 1/16, B29L 31/56

(54) **METHOD OF MANUFACTURING A LID DEVICE**

(71) Applicant: ESE World B.V., 5674 CB Nuenen (NL)
(72) Inventor: KRÜGEL, Christoffer, 16816 Neuruppin (DE)
(74) Representative: Müller, Thomas

(57) **Abstract**

A method for manufacturing a lid device (10), in particular a waste container lid device (10a), is described, wherein the lid device (10) comprises a first outer lid surface (11) and a second inner lid surface (12) and a lid edge (13) encompassing the lid surfaces (11, 12) circumferentially. The lid device (10) is manufactured by means of an injection moulding process in which the individual components of the lid device are injection molded. In order to avoid disadvantageous deformations of the lid device (10) that arise in particular in the process, it is provided according to the invention that the lid device (10) is manufactured by means of multiple injection moulding, that a first gating (22), for example via a first sprue device (22a) with a valve gate device (22b), is carried out on at least one of the lid surfaces (11, 12), and that a second gating (23), for example via a second sprue device (23a) with a film gate device (23b), is carried out on the lid edge (13).

## Description

The present invention relates to a method of manufacturing a lid device according to the preamble of claim 1. Furthermore, the invention also relates to such a lid device.

Lid devices per se are generally used to close receptacles or containers that are open on one side. According to a preferred embodiment, by means of which the invention is often described in the following, without the invention being limited to this specific embodiment, the lid device is a waste container lid device which, in its intended use, is arranged on a container body of the waste container, for example in a pivotable manner.

Lid devices of this type generally have a first, outer lid surface and a second, inner lid surface. The inner lid surface is orientated in the direction of the receptacle or container to be closed. The outer lid surface is oriented in the opposite direction. The thickness of the lid device is determined by the distance between the inner and outer lid surfaces. The lid device is delimited by a circumferential lid edge that delimits the lid surfaces.

The lid device is preferably manufactured in one piece, which can be achieved using suitable injection moulding processes, for example. The individual components of the lid device are moulded in a suitable manner.

The use of injection moulding processes in the manufacture of lid devices, in particular waste container lid devices, as well as in the manufacture of other container components, such as the container body, is well known in the state of the art.

EP 2 633 968 B1 of the applicant, for example, describes the manufacture of plastic containers by means of injection moulding. It is described there that injection moulding is no longer carried out centrally or centrally on the side surfaces of the plastic container, but rather on the edges of the plastic container or in the area of the edges of the plastic container. In particular, the known solution uses multiple injection moulding, which is due in particular to the size and shape of the plastic container to be manufactured, especially the container body.

However, the manufacture of lid devices for such plastic containers using injection moulding is also increasingly coming into focus. On the one hand, this is due to the fact that the thickness of the lid devices is being reduced more and more. On the other hand, new materials are increasingly being used to manufacture such lid devices. These materials are increasingly recycled materials. Due to the different configurations, shapes, and workpiece thicknesses, it is not possible to transfer the technical principles in manufacturing container bodies to the manufacture of lid devices without further ado.

It is the object of the present invention to further developing a method of injection moulding which is used to manufacture waste containers in such a way that it is applicable in the field of manufacturing lid devices. Furthermore, a correspondingly improved lid device is also to be provided.

According to the invention, this object is solved by the method for manufacturing a lid device with the features according to independent claim 1, which represents the first aspect of the invention, and by the lid device with the features according to independent claims 12 and 13, which represents the second aspect of the invention.

Further features and details of the invention can be derived from the dependent claims, the description, and the drawing. Features and details described in connection with the first aspect of the invention also apply in full in connection with the second aspect of the invention, and vice versa. In particular, features and details described in connection with the method according to the invention also apply in full in connection with the lid device according to the invention, and vice versa.

The basic idea of the present invention is that the manufacture of the lid device, which is carried out by means of an injection moulding process, is carried out in the form of multiple injection moulding. This involves several injection moulding procedures at different locations on the lid device.

The invention is not limited to certain types of lid devices. For example, a waste container lid for use with a waste container can be manufactured by means of the method according to the invention. The finished lid device is then hinged, preferably releasably and, for example, pivotably, to a waste container, in particular to the body of the container. Such lid devices can be used in particular in connection with two-wheeled, three-wheeled, and four-wheeled waste containers.

According to one embodiment, the lid device that is manufactured with the method according to the invention, is provided as a one-piece lid device. Such a lid device comprises only one single lid element. According to a different embodiment, the lid device that is manufactured with the method according to the invention, is provided as a multi-part lid device. In such a case the lid device is provided as a so-called divided lid device. Such a lid device comprises two or more lid elements, which in particular co-operate with each other and which in particular in sum take over the function of the lid device. Each kind of lid device, in particular each lid element of a lid device can be manufactured with the method according to the present invention.

The lid devices, in particular the one or more lid elements can be used as modules. This means that they can be easily and conveniently replaced if they are damaged, for example. Or the lid devices or lid elements can be replaced if other types of waste are to be stored in an assigned waste container. For example, individual types of waste can be identified by specific lid colours. This makes the use of the lid devices particularly advantageous in the context of the circular economy.

The invention is also not limited to certain sizes, geometries, and contours of the lid device to be manufactured.

Likewise, the invention is not limited to certain plastic materials. It is preferred that the plastic materials can be processed by means of an injection moulding process. It is also preferable if the plastic materials have sufficient strength, hardness, and elasticity so that they can be used, for example, to manufacture lid devices for waste containers that are subjected to high stresses. According to one embodiment, the lid devices are made from recycled materials, or at least have a high degree of such recycled materials. This is also an enormous advantage in terms of the circular economy.

The lid device is manufactured by means of an injection moulding process. In principle, the invention is not limited to specific injection moulding processes. Injection moulding is a widely used process for the highly automated production of plastic workpieces by processing powder or granulate. Complexly shaped workpieces of almost any size and/or shape can be manufactured.

In general, in an injection moulding process, the material to be processed, in this case a plastic such as granulate, is first heated and plasticised in an injection moulding device. This means that the plastic is transformed into a thermoplastic state. The plasticised plastic material is then metered and then injected at high pressure into a mould of the injection moulding device, in particular into a cavity or mould. The pressure rises to a maximum value during filling and then gradually drops. Filling takes place via so-called sprue devices, for example sprue bushes, which open into the mould, in particular into its cavity. The mould has a cavity that determines the shape and surface structure of the lid device to be manufactured. The injection points are located where the material leaves the sprue equipment and is injected into the mould. These injection points can be recognised on the surface of the lid device once it has been completed. Once the actual injection process has been completed, a cooling process is carried out, the mould is then opened and the finished lid device is de-moulded. A further moulding process can now be carried out.

In the method according to the invention, multiple gating takes place with a first gating and a second gating. The first and second gating can be the same or different. Examples of this are described below.

In particular, the manufacture of the lid devices according to the invention enables them to be optimally stacked, especially for storage and transport. The method according to the invention can be used to produce lid devices with reduced thickness, i.e. wall thickness. Lid devices can be manufactured which have a wide variety of areas of different shapes, for example large areas for or with special markings, areas with smaller or larger openings in the lid body, and the like, so that the usability of lid devices manufactured in this way is increased. In addition, the method according to the invention ensures that the formation of deformations is prevented, or at least greatly reduced. The occurrence of such deformations otherwise increases with the reduction of the lid thickness and/or with the increasing content of recycled material used.

In the following, individual features of the invention are often referred to as "first" and "second" features. This is primarily for differentiation purposes with regard to different functionality and/or design of the features.

The individual aspects of the invention are now described in detail.

According to the first aspect of the invention, a method for manufacturing a lid device, in particular a waste container lid device, is provided, which comprises the features of independent claim 1.

The lid device to be manufactured comprises a first outer lid surface and a second inner lid surface. The second inner lid surface is directed in the direction of the object to be closed, for example a container, a waste container, or the like. The first outer lid surface is oriented in the opposite direction. The distance between the inner and outer lid surface represents the thickness of the lid device. The lid device according to the invention is preferably a flat or almost flat panel element. The term lid device in particular subsumes any flat panel element having a lengths and width which are a multiple of its height or thickness.

The lid devices also comprise a lid edge that surrounds and encompasses the lid surfaces.

The lid device is manufactured by means of an injection moulding process. In principle, the invention is not limited to specific injection moulding processes. Preferred embodiments for suitable injection moulding processes are described in greater detail below. The injection moulding process is basically characterised by the fact that the individual components of the lid device are injection moulded, in particular gated. This means in particular that the material is injected into a mould, for example into a cavity of a mould which has the contour or at least approximately the contour of the lid device to be manufactured, whereby the individual components of the lid device are formed. A preferred embodiment of how this can be done is described in greater detail below.

According to the invention, the lid device is manufactured by multiple injection moulding. This means that the liquid plastic material is not only injected into the cavity at a single point in order to manufacture the lid device, but at several points that are spatially separated from one another. This type of multiple injection is particularly necessary for thin wall thicknesses of the lid device in order to reduce the injection pressure.

According to the invention, a first gating, which is a first type of gating, is carried out on at least one of the lid surfaces. A second gating, which is a second type of gating, is carried out on the edge of the lid. Examples of this are explained further on in the description.

According to one embodiment, the first gating and the second gating are carried out in the same way, that means according to the same technical injection moulding principles. According to another, preferred embodiment, however, the first gating and the second gating are carried out in different ways, that means according to different injection moulding principles.

The gating takes place via a sprue device, which can be denoted as a runner device also. In particular, this is a small opening in the cavity or mould through which molten plastic can flow into the cavity, creating the final lid device. The sprue device is a critical control point where the plastic is injected and ensures that the material fills the cavity evenly. The design, size and placement of the sprue device has a direct impact on part quality, flow control and the prevention of common defects, such as deformations like sink marks, warping and the like, as well as air bubbles. The right sprue design is crucial for successful injection moulding. The design of the sprue device, especially its gate, also plays a decisive role in the success of the injection moulding process.

According to one embodiment, the first gating takes place via at least one first sprue device with a first sprue design. According to one embodiment, a point injection is realised with the first sprue device. Examples of such first gating devices are given in the further course of the description.

According to one embodiment, the first sprue device comprises a so-called valve gate device. Of course, the first sprue device can also be designed in other ways, so that the invention is not limited to this specific embodiment.

It is the main function of a valve gate device to manage the plastic's melt flow into the mould. It achieves this by controlling the shut-off time, preventing the flow fronts from colliding at the centre. According to one embodiment, the valve gate device comprises a nozzle through which the molten material gets pressed and injected into the cavity. The open end of the nozzle is defined as the gate. In order to lock the gate, the valve gate device usually comprises a shut-off pin, a nozzle for example. Through mechanical force, the shut-off pin slides forward and seals the gate, if necessary. Also, utilizing mechanical shut-off pins, valve gate devices regulate the plastic flow inside the cavity of the heated mould, thereby ensuring the opening and closing of the nozzles at the gate. Valve gate devices are particularly effective for thin wall moulding applications, lid devices for example. Parts that require thin wall moulding are often characterised by high fill rates, and subjected to high pressures, and rapid cooling. It is an advantage of such valve gate devices, that no residual cones are created during the manufacturing process, that require a post-treatment. In particular, such residual cones are disadvantageous in connection with thin workpieces. Valve gate devices are preferably useful in hot runner systems.

According to one embodiment, the first gating takes place via two or more first sprue devices at different locations on at least one of the lid surfaces. In principle, a single first sprue device is sufficient for carrying out the invention. However, depending on the size and shape of the lid device to be manufactured, it may be necessary or advantageous to provide two or more first sprue devices, which are then spatially spaced apart from one another, so that a first gating takes place at different locations on the lid surfaces. If the lid device comprises two or more lid elements, the aforementioned, in particular, applies with regard to each lid element.

According to one embodiment, the first gating is carried out on the inner lid surface, i.e. on the inside of the lid and/or on the outer lid surface, i.e. on the outside of the lid. In particular, the inner side is the side facing the object to be closed with the lid device, for example a container, such as a waste container. If the first gating is carried out on the inside, no injection points can be seen on the outside of the finished lid device. If the first gating is carried out on the outside, the process is generally simpler in terms of design and therefore less complex.

According to one embodiment, the second gating takes place via at least one second sprue device with a second sprue design. According to one embodiment, a face injection is realised with the second sprue device. Examples of such second sprue devices are given in the further course of the description.

According to one embodiment, identically designed sprue devices are used for the first gating and the second gating, for example correspondingly designed first sprue devices.

According to a preferred embodiment, differently designed sprue devices are used for the first gating and the second gating. According to one embodiment, one or more first sprue device(s) is/are used for the first gating. For the second gating, one or more different second sprue device(s) is/are used for this purpose. According to one embodiment, one or two first sprue devices are used for the first gating and one second sprue device is used for the second gating.

According to one embodiment, the second sprue device comprises at least one film gate device.

A film gate device comprises a flat gate, and the width of the gate can span the entire edge of the cavity or a part of the cavity. Film gate devices are often used for large, flat parts such as lid devices. Film gate devices are easy to produce when building a mould and are easily modified if needed. A film gate device gate can have a larger cross-sectional area compared to other gates. This allows more plastic to flow into the mould and the ability to have longer hold times because of the longer gate freeze.

According to one embodiment, the second gating takes place via two or more second sprue devices at different points on the edge of the lid device.

According to one embodiment, the lid device, in particular the one or more lid elements, has/have a rectangular or approximately rectangular contour. In this case, the edge of the lid device consists of a number of edge sections, for example a front edge section, a rear edge section and two transverse edge sections. The rear edge section is in particular the edge section via which the lid device is hinged to the object to be closed, such as the container body of a waste container, in particular in a pivotable manner. The transverse edge sections are the edge sections that connect the front edge section and the rear edge section.

According to one embodiment, the second gating takes place on the rear edge section. However, the second gating can also be carried out on other edge sections, for example a transverse edge section. The second gating can also be carried out on two or more edge sections. The second gating is provided via the corresponding second sprue device(s), in particular based to the size and/or shape and/or contour of the lid device to be manufactured. According to one embodiment, if the second gating is provided via two or more second sprue devices, the second sprue devices are preferably provided spatially separated from each other, either on the same edge section or on different edge sections.

According to one embodiment, the process is carried out with a combination of one second sprue device in the form of a film gate device, according to another embodiment a number of two or more second sprue devices, and a first sprue device in the form of a valve gate device, according to another embodiment a number of two or more first sprue devices. The second sprue device is located in the area of the lid edge, for example in the area of an edge section. In the case of such an edge section, the second sprue device can be provided in the centre of the edge section, for example. If a single first sprue device is provided, this can in principle be located anywhere in the area of the lid surface. According to one embodiment, the first sprue device is located in the front third of the lid surface, as seen from the direction of a front edge section of the lid edge, if the lid has the rectangular contour described above. In the case of two or more first sprue devices, these can be located in the centre or offset in the area of a lid surface, for example the first outer lid surface, or the second inner lid surface, or both the outer and inner lid surfaces, depending on the design of the lid device.

According to one embodiment, the lid device is manufactured in an injection moulding device which comprises a tool with a mould or cavity having a shape corresponding to the contour of the lid device to be manufactured. The injection moulding device thus comprises a tool which in turn comprises a cavity corresponding to the contour of the lid device to be manufactured. Furthermore, the tool comprises two or more sprue devices for injecting plastic material into the cavity. The sprue device can be a sprue bush. The sprue bush can be an injection moulding nozzle or a component of an injection moulding nozzle. At least one first sprue device opens into the cavity in the region of at least one lid surface of the lid to be manufactured, while at least one second sprue device opens into the cavity in the region of the lid edge of the lid device to be manufactured.

According to one embodiment, the lid device is manufactured by means of a non-sequential injection moulding process. With the method according to the invention it is possible to manufacture a distortion-free lid device without a sequential filling.

According to another embodiment, the lid device is manufactured by means of a sequential injection moulding process, in particular by means of a cascade injection moulding process.

Cascade injection moulding is a form of sequential injection moulding. In particular, several shut-off nozzles are used, which make it possible to fill the cavity or mould of the tool via several gates. Cascade injection moulding processes are used in particular with hot runner systems. In particular, a hot runner system is a special design of sprue system. Here, the sprue is heated to a higher temperature and thermally insulated from the rest of the injection moulding device. In this way, the plastic in the sprue system remains liquid. There is a shut-off nozzle at the end of the hot runner, which can be closed by shut-off pin, a needle for example.

The filling of the cavity can be individually and optimally adjusted during cascade injection moulding, as the shut-off nozzles can be opened and closed individually and independently of each other. The liquid plastic is first injected into the cavity via individual shut-off nozzles. If the melt front passes a shut-off nozzle downstream of these individual shut-off nozzles, this is opened. The liquid plastic material now flows through all open shut-off nozzles, with the greater part of the volume flow passing through the last opened gate, as this has the lower flow resistance. In this way, one shut-off nozzle after the other is opened in a cascade. Cascade injection moulding makes it possible to produce components with long flow paths without weld lines.

The combination of a first gating via at least one first sprue device, such as a valve gate device, and a second gating via at least one second sprue device, such as a film gate device, leads to lower stresses at the boundaries of the melt and therefore results in less deformation.

According to the second aspect of the invention, a lid device is provided which comprises the features of independent claims 12 or 13.

The lid device, which is in particular a waste container lid device, comprises a first outer lid surface, a second inner lid surface and a lid edge that encompasses and surrounds the lid surfaces. The lid device can be a one-piece or a multi-peace lid device as explained further above.

According to one embodiment, the lid device is characterised in that it is obtained, that is that it can get manufactured or is manufactured, by a method according to the invention as described above. Such a lid device is also described in various embodiments in connection with the method according to the invention, so that with regard to the design of the lid device, full reference is also made to the explanations of the method according to the invention.

Alternatively, or additionally, the lid device according to another embodiment is characterised in that it comprises at least one injection point on the second inner lid surface and/or on the first outer lid surface and on the lid edge. The injection point is in particular the point at which the material is injected into a mould, for example into a mould cavity, via the sprue device. The lid device comprises at least two injection points. Of course, as described in connection with the method according to the invention, the number of injection points, which corresponds to the number of sprue devices, can be more than two. Likewise, as is also described in connection with the method according to the invention, the injection points can also be formed at different points on the lid device.

According to one embodiment, the lid device comprises at least one injection point produced by a first sprue device on the second inner lid surface and/or on the first outer lid surface. At the edge of the lid device, the lid device comprises at least one injection point created by a second sprue device.

The invention will now be explained in more detail with reference to the enclosed drawings. It shows
- Figure 1: a schematic representation of the manufacture of a lid device in the form of a waste container lid device according to the invention; and
- Figures 2 to 5: schematic representations of different types of waste containers, each comprising a lid device which was manufactured by a method of the invention generally shown in Figure 1.

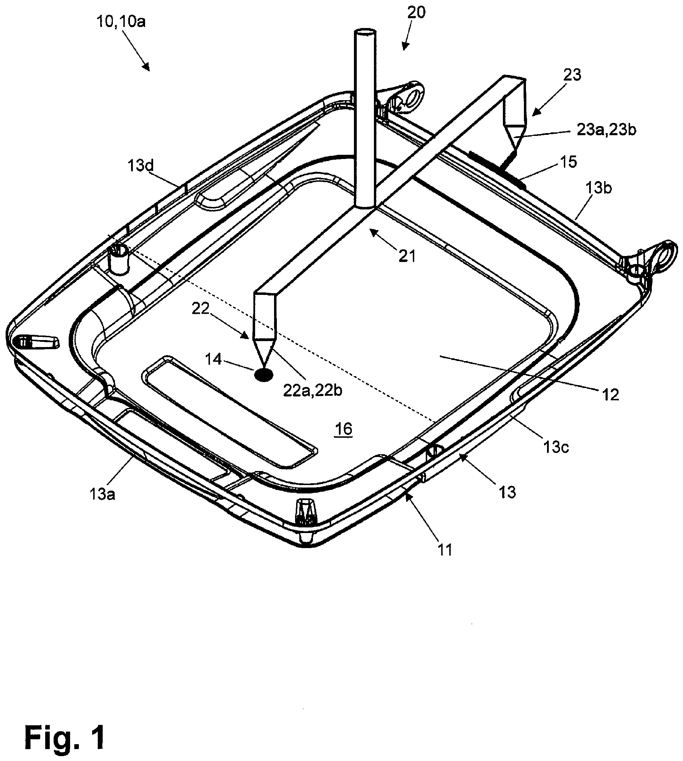

Figure 1 shows how a lid device 10, which is designed as a waste container lid device 10a, is manufactured using an injection moulding process. After completion, the lid device 10 should have a first outer lid surface 11 and a second inner lid surface 12. Figure 1 shows a view on the second inner lid surface 12. The lid surfaces 11, 12 are delimited by a circumferential lid edge 13. The lid device 10 comprises a rectangular or approximately rectangular contour. For this reason, the lid edge 13 is divided into several sections, namely a front edge section 13a, a rear edge section 13b and two transverse edge sections 13c, 13d, which connect the front edge section 13a and the rear edge section 13b to each other. The lid device 10 gets later arranged on the container body of a waste container via the rear edge section 13b, in particular in a pivotable manner.

The lid device 10 is manufactured using an injection moulding process by means of an injection moulding device 20. The injection moulding device 20 comprises, among other things, a tool 21, which is only shown in schematic form in the figure. The tool 21 comprises a cavity or mould (not shown) which corresponds to the contour of the lid device 10 to be manufactured. Furthermore, the tool 21 comprises corresponding sprue devices 22a, 23a.

Firstly, the plastic is converted into a thermoplastic state. The plasticised plastic material is then metered and then injected into the cavity of the tool 21 of the injection moulding device 20. This takes place via the sprue devices 22a, 23a, which open into the tool 21, in particular into its cavity. The so-called injection points 14, 15 are located where the plasticised plastic material leaves the sprue devices 22a, 23a and is injected into the tool 21, in particular into its cavity. These injection points 14, 15 can be seen on the lid surface of the lid device 10 after it has been completed, in the example shown on the second inner lid surface 12, and on the lid edge 13.

As the thickness or wall thickness of such lid devices 10 is constantly being reduced, and as recycled materials are increasingly being used to manufacture the lid devices 10, there is a risk of deformations occurring on the lid device 10 during the manufacture of the lid device 10 as a result of stresses during the injection moulding process.

In order to avoid these disadvantages, the injection moulding device 20 or the manufacturing process is designed in a special way.

The injection moulding device 20 is now used for multiple gating. This means that the tool 21 comprises several sprue devices 22a, 23a, which are also designed differently.

As can be seen from Figure 1, the injection moulding device 20 for a first gating 22, by means of which the first injection point 14 is created on the lid device 10, initially comprises at least one first sprue device 22a, by means of which a point-shaped injection is made on the lid surface, shown here is the inner lid surface 12. In the example shown, the first sprue device 22a is designed as a valve gate device 22b.

Shown in the example is a single first sprue device 22a, via which preferably a first gating 22 takes place in the front third 16 of the lid device 10, as seen from the direction of the front edge section 13a. Of course, depending on the size and shape of the lid device 10, two or more such first sprue devices 22a can also be provided, via which a first gating 22 can then be carried out at different points of the lid device 10. Or the first sprue device 22a can be provided at a different location on the lid device, in particular the second inner lid surface 12.

Furthermore, the injection moulding device 20 comprises at least one second sprue device 23a for a second gating 23, by means of which the second injection point 15 is created, by means of which a face-shaped injection is carried out on the lid edge 13, shown here on the rear edge section 13b. In the example shown, the second sprue device 23a is designed as a film gate device 23b. Of course, depending on the size and shape of the lid device 10, two or more second sprue devices 23a can also be provided. Or the second sprue device 23a can be provided on a different edge section of the lid edge 13.

Once the actual injection process is completed, a cooling process is carried out, the tool 21 is then opened and the finished lid device 10 is de-moulded.

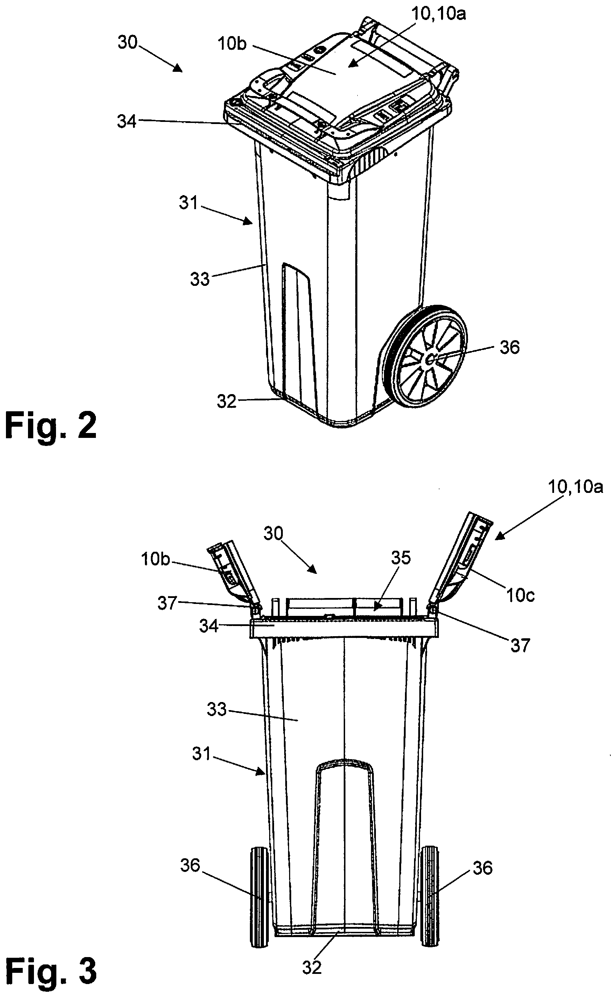

According to one preferred embodiment, the present invention is realized in the field of waste containers. Figures 2 to 5 depict a number of different types of waste containers, for which the present invention is applicable. Nevertheless, the present invention is not limited to these specific embodiments.

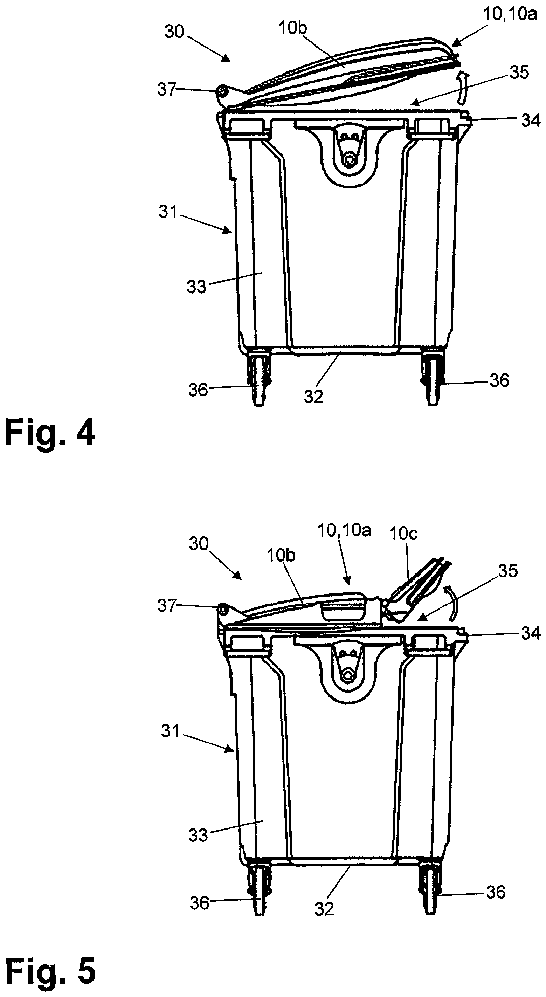

All different embodiments shown in Figures 2 to 5 each show a waste container 30. The waste container 30 is preferably designed as a waste container with a capacity of up to 1,700 litres. Figures 2 and 3 show a waste container 30 having a capacity of up to 240 litres, whilst Figures 4 and 5 each show a large waste container 30 having a capacity between 1,100 litres and 1,700 litres for example. The waste containers 30 are used in particular for the temporary storage of waste and/or valuable materials.

Each waste container 30 shown in Figures 2 to 5 comprises a container body 31. The container body 31 initially comprises a container bottom 32. A container side wall 33 extends from the container bottom 32 in the direction of and up to an upper edge 34 of the container body 31. In particular, the upper edge 34 is also the upper rim of the waste container 30.

In principle, the invention is not limited to certain shapes of the container side wall 33. For example, the container side wall 33 could have a round, oval or similar shape. In another embodiment, the container side wall 33 has a polygonal shape. In a preferred embodiment, the container side wall 33 has a rectangular shape or a shape approximating a rectangle, so that the container body 31 also has such a rectangular shape or a shape approximating a rectangle. In this case, the container side wall 33 or the container body 31 has four wall segments abutting each other at their edges. The edges are preferably designed as rounded edges. In this case, the container side wall 33 of the container body 31 preferably consists of a front side, a rear side and two transverse sides, which extend between the front side and rear side and connect them to each other.

The container body 31 is closed at the bottom by the container bottom 32, from which the container side wall 33, in particular the wall segments, protrudes/protrudes and extends/extends upwards, i.e. away from the container bottom 32.

The container side wall 33, or the wall segments, and the container bottom 32 delimit an interior space of the container body 31, which is provided to receive and hold the waste and/or valuable materials and which forms the receiving space of the waste container 30. Depending on the container type, the interior space or the receiving space has a capacity of up to 1,700 litres, for example. For example, the interior space has a capacity of up to 120 litres, preferably up to 140 litres, preferably up to 190 litres, preferably up to 240 litres (as shown in Figures 2 and 3), preferably up to 390 litres, preferably up to 700 litres. However, the invention is also applicable to large waste containers which have a higher capacity of up to 1,700 litres, for example a capacity of 1,100 litres (as shown in Figures 4 and 5).

At the upper end of the container side wall 33, which is the opposite end of the container side wall 33 compared to the container bottom 32, i.e. at the upper edge 34 of the container body 31, the container body 31 comprises an insertion opening 35 for waste, the insertion opening 35 preferably being bounded by the side wall 33 of the container body 31 or by the upper edge 34 and extending over the entire cross-sectional area of the container body 31 in the region of its upper edge 34.

The waste container 30 can be a mobile waste container. Such a waste container preferably has a drive gear, which in turn comprises a number of wheels 36. According to the embodiments shown in Figures 2 and 3, the mobile waste container 30 comprises two such wheels 36 which are arranged on a common first axle. However, each wheel device can also be arranged separately from the other wheel device on an individual axle. According to a different embodiment, which is not shown in the drawings, the mobile waste container 30 can have at least one further additional wheel device, a third wheel device for example, wherein the additional wheel device is arranged on its own axis, which is spatially spaced from the axle(es) above. The additional wheel device can be arranged in such a way that it can change its rolling or movement direction. When using three such wheel devices, the waste container 30 can be moved without the need to tip the waste container. In addition, it is much easier to align the waste container. If the first wheel devices are arranged on a first axis in the area of the rear side of the container body, the additional wheel device is preferably arranged on a second axis, for example in the area of the front side of the container body. The additional wheel device can be described as a type of "front wheel" for manoeuvring the waste container. According to further embodiments shown in Figures 4 and 5, the waste container 30 comprises four such wheels 36. The four wheels 36 are each preferably arranged in a corner area of the container body 31, preferably on the side wall 33 in the area of the container bottom 32 or below the container bottom 32. Such a design with four wheels 36 is used in particular for large waste collection containers 30.

The insertion opening 35 formed in the container body 31 is usually closed by means of a lid device 10, 10a, whereby the lid device 10, 10a is arranged or hinged to the container body 31 by means of hinge devices 37, so that it can swivel in particular.

The lid device 10, 10a can be designed in one or more parts. According to one embodiment, the lid device 10, 10a consists of only one lid element 10b. Figures 2 and 4 show two such examples. According to a different embodiment, the lid device 10, 10a is divided and consists of several lid elements, for example two lid elements 10b, 10c. Figures 3 and 5 show two such examples.

Each lid device 10, 10a of the waste containers 30 shown in Figures 2 to 5, in particular, each lid element 10b, 10c, can get manufactured in way as described in connection with Figure 1 further above.

### List of reference numerals

- 10: Lid device
- 10a: Waste container lid device
- 10b: Lid element
- 10c: Lid element
- 11: First, outer lid surface
- 12: Second, inner lid surface
- 13: Lid edge
- 13a: Front edge section
- 13b: Back edge section
- 13c: Transverse edge section
- 13d: Transverse edge section
- 14: First injection point
- 15: Second injection point
- 16: Front third of the lid device
- 20: Injection moulding device
- 21: Tool
- 22: First gating
- 22a: First sprue device
- 22b: Valve-gate-device
- 23: Second gating
- 23a: Second sprue device
- 23b: Film-gate-device
- 30: Waste container
- 31: Container body
- 32: Container bottom
- 33: Container side wall
- 34: Upper edge of container body
- 35: Insertion opening
- 36: Wheel
- 37: Hinge device

## Claims

1. Method of manufacturing a lid device (10), in particular a waste container lid device (10a), the lid device (10) comprising a first outer lid surface (11), a second inner lid surface (12) and a lid edge (13) encompassing the lid surfaces (11, 12) circumferentially, wherein the lid device (10) is manufactured by means of an injection moulding process, **characterised in that** the lid device (10) is manufactured by multiple gating, **in that** a first gating (22) is carried out on at least one of the lid surfaces (11, 12), and **in that** a second gating (23) is carried out on the lid edge (13).

2. Method according to claim 1, **characterised in that** the first gating (22) and the second gating (23) are carried out in different ways.

3. Method according to claim 1 or 2, **characterised in that** the first gating (22) is carried out via at least one first sprue device (22a) with a first sprue design.

4. Method according to claim 3, **characterised in that** the first sprue device (22a) comprises at least one valve gate device (22b).

5. Method according to claim 3 or 4, **characterised in that** the first gating (22) is carried out via two or more first sprue devices (22a) at different locations on at least one of the lid surfaces (11, 12).

6. Method according to anyone of claims 1 to 5, **characterised in that** the first gating (22) is carried out on the second inner lid surface (12) and/or on the first outer lid surface (11).

7. Method according to anyone of claims 1 to 6, **characterised in that** the second gating (23) is carried out via at least one second sprue device (23a) with a second sprue design.

8. Method according to claim 7, **characterised in that** the second sprue device (23a) comprises at least one film gate device (23b).

9. Method according to claim 7 or 8, **characterised in that** the second gating (23) is carried out via two or more second sprue devices (23a) at different points on the lid edge (13).

10. Method according to anyone of claims 1 to 9, **characterised in that** the lid device (10) comprises a rectangular or approximately rectangular contour, **in that** the lid edge (13) comprises a front edge section (13a), a rear edge section (13b) and two transverse edge sections (13c, 13d), and **in that** the second gating (23) is carried out in particular on the rear edge section (13b).

11. Method according to anyone of claims 1 to 10, **characterised in that** the lid device (10) is manufactured in an injection moulding device (20) which comprises a tool (21) with a cavity which corresponds to the contour of the lid device (10) to be manufactured, and with two or more sprue devices (22a, 23a) for injecting plastic material into the tool (21), **in that** at least one first sprue device (22a) opens into the tool (21) in the region of at least one lid surface (11, 12) of the lid device (10) to be manufactured, and **in that** at least one second sprue device (23a) opens into the tool (21) in the region of the lid edge (13) of the lid device (10) to be manufactured.

12. Lid device (10), in particular waste container lid device (10a), comprising a first outer lid surface (11), a second inner lid surface (12), as well as a lid edge (13) encompassing the lid surfaces (11, 12) circumferentially, **characterised in that** the lid device (10) is obtained by a method according to anyone of claims 1 to 11.

13. Lid device (10), in particular waste container lid device (10a), comprising a first outer lid surface (11), a second inner lid surface (12), as well as a lid edge (13) encompassing the lid surfaces (11, 12) circumferentially, in particular lid device (10) according to claim 12, **characterised in that** the lid device (10) comprises at least one injection point (14) on the second inner lid surface (12) and/or on the first outer lid surface (11), and that the lid device (10) comprises at least one injection point (15) on the lid edge (13).

14. Lid device according to claim 13, **characterised in that** the lid device (10) comprises at least one first injection point (14) produced by a first sprue device (22a) on the second inner lid surface (12) and/or on the first outer lid surface (11), and at least one second injection point (15) produced by a second sprue device (23a) on the lid edge (13).
